# EUROPÄISCHE PATENTSCHRIFT

(11) **EP 3 033 217 B1**
(45) Veröffentlichungstag und Bekanntmachung des Hinweises auf die Patenterteilung: **01.02.2017**
(21) Anmeldenummer: 14747915.8
(22) Anmeldetag: 31.07.2014
(51) Int. Cl.: B29C 55/16, B29C 55/20

(54) **UMLENKVORRICHTUNG FÜR EINE KETTE AUS SPANNKLUPPEN MIT LAUFROLLEN ZUM TRANSPORT EINER BEWEGTEN MATERIALBAHN**
DEFLECTING DEVICE FOR A CHAIN COMPOSED OF TENTER CLIPS HAVING RUNNING ROLLERS FOR TRANSPORTING A MOVING MATERIAL WEB
DISPOSITIF DE RENVOI POUR CHAÎNE CONSTITUÉE DE GRIFFES DE SERRAGE COMPRENANT DES GALETS DE ROULEMENT DESTINÉS À TRANSPORTER UNE BANDE DE MATÉRIAU EN DÉPLACEMENT

(30) Priorität: 14.08.2013 DE 102013216180
(43) Veröffentlichungstag der Anmeldung: 22.06.2016
(73) Patentinhaber: Lindauer Dornier Gesellschaft mit beschränkter Haftung, 88131 Lindau (DE)
(72) Erfinder: RESCH, Karsten, 88138 Weißensberg (DE); URBANZYK, Kai, 88131 Lindau (DE); VEIL, Martin, 88131 Lindau (DE)
(86) Internationale Anmeldenummer: PCT/EP2014/066508
(87) Internationale Veröffentlichungsnummer: WO 2015/022199

(56) Entgegenhaltungen:
- EP-A1- 0 760 740
- DE-A1-102010 023 347
- DE-B3-102011 075 994
- US-A- 5 161 674

## Beschreibung

### Technisches Gebiet

Die vorliegende Erfindung betrifft eine Umlenkvorrichtung für eine Kette aus Spannkluppen mit Laufrollen zum Transport einer bewegten Materialbahn.

### Stand der Technik

In Anlagen zum Spannen bzw. Recken von Materialbahnen wird eine Vielzahl von Spannkluppen zu endlos umlaufenden Kluppenketten zusammengesetzt, die auf beiden Seiten einer Materialbahn in Längsrichtung angeordnet sind. Mittels der Spannkluppen wird die Materialbahn durch die Spann- oder Reckanlage transportiert.

Eine derartige Anlage wird zum Beispiel in der DE 34 43 905 C2 beschrieben. Solche Anlagen werden bei der Produktion von Kunststofffolien eingesetzt, aber auch in anderen Bereichen, zum Beispiel beim Spannen von Textilbahnen.

Die Spannkluppe enthält im Allgemeinen einen Mechanismus zum Festklemmen der Materialbahn, Elemente zum Verbinden der einzelnen Spannkluppen zu einer Kette sowie Laufrollen zur vertikalen und horizontalen Führung der Spannkluppen auf einer Führungsschiene. In der Regel sind die Laufrollen der Spannkluppen und die Führungsschiene so gestaltet, dass eine Abstützung der Spannkluppen in der Ebene der Materialbahn auf zwei Laufbahnen erfolgt, die auf zwei einander abgewandten Seiten der Führungsschiene angeordnet sind.

Am Auslass der Anlage geben die Spannkluppen die Materialbahn frei. Dort ist ein Bereich vorgesehen, in dem die endlose Kluppenkette angetrieben, umgelenkt und über ein weiteres Führungssystem zum Anfangspunkt zurückgebracht wird.

Die Umlenkung der Kluppenketten am Auslauf der Anlage über ein Kettenrad verursacht besonders bei schnell laufenden Anlagen mit großen Bahnkräften Störungen im Lauf der Spannkluppen. Diese Probleme entstehen zum Beispiel im Übergang von geraden Abschnitten der Führungsschienen in den Bereich von Umlenkungen (z.B. DE 13 03 870 C2) oder durch Teilungsfehler in der Kluppenkette aufgrund von Verschleiß (zum Beispiel in der DE 34 43 905 C2).

Störungen im Lauf der Spannkluppen können auch durch Bauteiltoleranzen entstehen. Um in gerade verlaufenden Bahnabschnitten derartige Toleranzen zwischen Führungsschiene und Laufrollen auszugleichen, wird in der EP 0 760 740 B1 vorgeschlagen, den Abstand zwischen den beiden Laufbahnen durch elastische Zwischenelemente in der Führungsschiene anzupassen.

Aufgabe der vorliegenden Erfindung ist die Bereitstellung einer Umlenkvorrichtung für eine Kette aus Spannkluppen, bei der im Bereich der Umlenkung weniger Störungen auftreten, die durch Toleranzen bzw. verschleißbedingte Teilungsfehler verursacht werden.

### Beschreibung der Erfindung

Die Aufgabe wird durch eine Umlenkvorrichtung für eine Kette aus Spannkluppen mit Laufrollen zum Transport einer bewegten Materialbahn gemäß dem unabhängigen Anspruch gelöst.

Die Umlenkvorrichtung dient zur Umlenkung einer an sich bekannten Kette aus Spannkluppen mit Laufrollen, die an einer Führungsschiene abrollen. Die Spannkluppen weisen in der Regel Elemente auf, über die die einzelnen Spannkluppen miteinander zu einer Kluppenkette verbunden sind. Die Umlenkvorrichtung weist ein Kettenrad auf, das so angeordnet ist, dass es in Kettenglieder oder Kettenbolzen der Kluppenkette eingreift. Das Kettenrad kann von einem motorischen Antrieb antreibbar sein. An der Umlenkvorrichtung ist weiterhin eine Führungsschiene mit mindestens zwei Laufbahnen für die Laufrollen der Spannkluppen vorgesehen. Die beiden Laufbahnen sind jeweils auf zwei einander abgewandten Seiten der Führungsschiene angeordnet. Diese beiden Laufbahnen verlaufen parallel zur Drehachse des Kettenrades. Die Laufbahnen dienen zur Aufnahme von Kräften an der Spannkluppe, die in einander entgegen gesetzten Richtungen parallel zur Ebene der bewegten Materialbahn wirken. Durch diese an sich bekannte Ausführung werden z.B. in einer Reckanlage die Zugkräfte der Materialbahn sicher von denjenigen Laufrollen aufgenommen, die sich an der einen der beiden Laufbahnen abstützen, während in Bereichen mit reduzierter Zugkraft oder mit dynamischen Kräften, die in entgegen gesetzter Richtung wirken, eine Abstützung der Kräfte über die Laufrollen erfolgt, die auf der anderen der beiden Laufbahnen abrollen. Selbstverständlich können auch weitere Laufrollen und Laufbahnen vorgesehen sein, über die sich die oben erwähnten Kräfte verteilen oder die weitere Kräfte aufnehmen, zum Beispiel solche, die senkrecht zur Ebene der bewegten Materialbahn wirken.

Zum Umlenken der Kluppenkette weist die Führungsschiene mindestens einen gekrümmten Abschnitt auf. Je nach Ausführung der Reckanlage kann das zum Beispiel eine Umlenkung um weniger als 90 Grad, um 90 Grad, um 180 Grad oder mehr als 180 Grad sein. Durch eine oder mehrere derartige Umlenkungen wird die endlose Kluppenkette zum Beispiel am Ende einer Reckanlage aus einer Richtung in Laufrichtung der Materialbahn in eine Richtung entgegen der Laufrichtung der Materialbahn umgelenkt.

Die erfindungsgemäße Umlenkvorrichtung ist dadurch gekennzeichnet, dass mindestens ein Teil des gekrümmten Abschnitts der Führungsschiene in Bezug auf das Kettenrad radial verschiebbar ist.

Zu diesem Zweck sind Verbindungselemente vorgesehen, über die die Führungsschiene mit der Umlenkvorrichtung verbunden ist. Mehrere dieser Verbindungselemente sind derartig ausgeführt, dass eine radiale Verschiebbarkeit der Führungsschiene oder auch nur eines Abschnitts der Führungsschiene gewährleistet ist.

Durch die radiale Verschiebbarkeit der Führungsschiene im Bereich des Kettenrades lassen sich im gekrümmten Bereich der Führungsschiene in gewissen Grenzen größere oder kleiner Krümmungsradien der Führungsschiene erzielen. Die Konstruktion der Verbindungselemente ist dabei so ausgeführt, dass die radiale Verschiebung abschnittsweise oder über den ganzen Umfang des gekrümmten Abschnitts erfolgen kann und zwar auch im laufenden Betrieb der Anlage. Dadurch kann eine selbstständige Anpassung an eine - zum Beispiel durch Verschleiß - veränderte Teilung der Kluppenkette erfolgen. Diese kann in unterschiedlichen Abschnitten der Kluppenkette auch verschieden groß sein - zum Beispiel aufgrund von Toleranzen in den Kettengliedern.

Um die radiale Verschiebbarkeit der Führungsschiene im Bereich des Kettenrades zu unterstützen, ist es besonders vorteilhaft, wenn im Bereich des gekrümmten Abschnitts der Führungsschiene zusätzlich zur radialen Verschiebbarkeit außerdem eine tangentiale Verschiebbarkeit der Führungsschiene gewährleistet ist. Das bedeutet, dass die Führungsschiene in ihrem gekrümmten Abschnitt abschnittsweise oder über den ganzen Umfang des gekrümmten Abschnitts in gewissen Grenzen auch in Umfangsrichtung, also tangential in Bezug auf das Kettenrad verschiebbar ist. Dies ist besonders dann sinnvoll, wenn die Umlenkung über einen größeren Umlenkwinkel erfolgt oder wenn die Führungsschiene nur wenig elastisch ist und die Verbindungselemente für die radiale Verschiebbarkeit in engen Abständen angeordnet sind.

Um eine solche tangentiale Verschiebbarkeit zu gewährleisten, können zum Beispiel mehrere Verbindungselemente zwischen Führungsschiene und Umlenkvorrichtung derartig gestaltet sein, dass eine tangentiale Verschiebbarkeit der Führungsschiene in Bezug auf das Kettenrad möglich ist. Dies können die gleichen Verbindungselemente sein, mit denen auch eine radiale Verschiebbarkeit ermöglicht wird oder es können für die tangentiale Verschiebbarkeit auch andere Verbindungselemente entsprechend angepasst werden.

Um eine derartige Verschiebbarkeit zu erreichen, kann ausgenutzt werden, dass die Führungsschiene selbst eine gewisse Elastizität aufweist. Wenn an den Verbindungselementen zwischen Führungsschiene und Umlenkeinrichtung Freiheitsgrade - das heißt Spiel - in radialer oder tangentialer Richtung vorgesehen sind, wird die Führungsschiene durch ihre Eigenelastizität in einer vorgegebenen definierten Position gehalten, die sich unter Einwirkung von größeren Kräften jedoch verändern kann. Sollte die Eigenelastizität der Führungsschiene für diesen Zweck nicht passend gewählt werden können, ist auch denkbar, an den Verbindungselementen federelastische Distanzstücke vorzusehen, die die Grundposition der Führungsschiene fixieren und die beim Einwirken von größeren Kräften elastisch nachgeben und so eine radiale und/oder tangentiale Verschiebung der Führungsschiene zulassen.

In einer weiteren Ausführungsform ist vorgesehen, dass ein geradliniger Abschnitt der Führungsschiene an den gekrümmten Abschnitt der Führungsschiene anschließt und dass der geradlinige Abschnitt mit der Umlenkvorrichtung in Längsrichtung der Führungsschiene verschiebbar verbunden ist. Durch diese Anordnung wird es möglich, ein Ende des gekrümmten Abschnitts der Führungsschiene fest mit der Umlenkvorrichtung zu verbinden, während das andere Ende sich an die radiale und/oder tangentiale Verschiebung der Führungsschiene im gekrümmten Abschnitt anpassen kann.

Die Führungsschiene kann in bekannter Art und Weise zum Beispiel als rechteckiges Federstahlband oder als Paket aus mehreren Federbändern ausgebildet sein.

In der Regel erfolgt die Verbindung zwischen Führungsschiene und Umlenkvorrichtung über einen Schienenträger. Es ist vorteilhaft, wenn der Schienenträger einen gekrümmten Abschnitt aufweist, der parallel zum gekrümmten Abschnitt der Führungsschiene verläuft. Durch diese Ausführung lässt sich der Schienenträger parallel zur Führungsschiene und zum Beispiel zwischen zwei übereinander liegenden Zahnkränzen des Kettenrades anordnen. Da an der Spannkluppe in der Regel auch noch Kettenrollen bzw. Kettenbolzen vorhanden sind, die bei der Umlenkung um das Kettenrad mit den Kettenradzähnen in Eingriff sind, ergibt sich durch die oben beschriebene Ausführung des Schienenträgers eine kompakte Bauform der Spannkluppe und eine stabile Unterstützung der Führungsschiene. Der Schienenträger kann im Übrigen als Rechteck- oder T-Profil ausgebildet sein.

Die Verbindungselemente können zum Beispiel als Zapfen mit einer Längsrichtung ausgebildet sein, wobei die Längsrichtung der Zapfen dabei im Wesentlichen in Richtung des Radius des Kettenrades verläuft.

Dabei sind zum Beispiel Bohrungen zur Aufnahme der Zapfen im Schienenträger vorhanden. Denkbar sind jedoch auch andere Befestigungsarten der Zapfen am Schienenträger- zum Beispiel eine stumpfe Schweißung - oder eine Kombination verschiedener Befestigungsarten.

Die Führungsschiene kann derartig mit den Zapfen verbunden sein dass sie in Bezug auf die Zapfen verschiebbar ist. Das kann eine Verschiebbarkeit in Längsrichtung der Zapfen sein, aber ebenso auch eine Verschiebbarkeit quer zur Längsrichtung der Zapfen, also in Umfangsrichtung, tangential zum gekrümmten Abschnitt der Führungsschiene.

Eine günstige Ausführungsform ergibt sich jedoch, indem die Zapfen in ihrer Längsrichtung verschiebbar gelagert sind. Die Länge der Zapfen und damit die Länge der Schiebeführung kann in diesem Fall relativ groß gewählt werden, sodass in radialer Richtung eine präzise Führung der mit den Zapfen verbundenen Führungsschiene gewährleistet ist.

Besonders dann, wenn auch noch eine tangentiale Verschiebbarkeit der Führungsschiene in Bezug auf das Kettenrad realisiert werden soll, ist es vorteilhaft, wenn an mehreren Zapfen Klemmelemente vorgesehen sind, über die die Führungsschiene mit den Zapfen verbunden ist.

Diese Klemmelemente können zum Beispiel als zweiteilige Klemmbacken ausgeführt sein, von denen die eine Teil-Klemmbacke fest am jeweiligen Zapfen angebracht ist, während die andere Teil- Klemmbacke derartig an der ersten Klemmbacke befestigt ist, dass zwischen beiden Teil-Klemmbacken die Führungsschiene in ihrer Längsrichtung - also tangential zum Kettenrad - verschiebbar gehalten wird.

Radiale Verschiebbarkeit und tangentiale Verschiebbarkeit können natürlich auch dadurch erzielt werden, dass die Zapfen und die Klemmelemente derartig gestaltet sind, dass in Bezug auf die Zapfen eine Verschiebbarkeit der Klemmelemente mit der darin geklemmten Führungsschiene möglich ist.

Für ein sicheres Arbeiten der erfindungsgemäßen Umlenkvorrichtung ist es im Übrigen sinnvoll, wenn die Größe der Verschiebbarkeit begrenzt ist. Dies kann zum Beispiel durch Anschläge im Bereich der Verschiebewege der Verbindungselemente oder der Führungsschiene ermöglicht werden.

### Kurze Beschreibung der Zeichnung , Vorteilhafte Ausführungsformen der Erfindung

- **Figur 1**: Schnitt A-A, Ansicht einer Ausführungsform der erfindungsgemäßen Umlenkvorrichtung
- **Figur 2**: Schnitt B-B der Ausführungsform aus Figur 1
- **Figur 3**: Schnittdarstellung einer weiteren Ausführungsform in einer Ansicht, die in etwa dem Ausschnitt C in Figur 1 entspricht
- **Figur 4**: Ansicht D-D aus Figur 1.

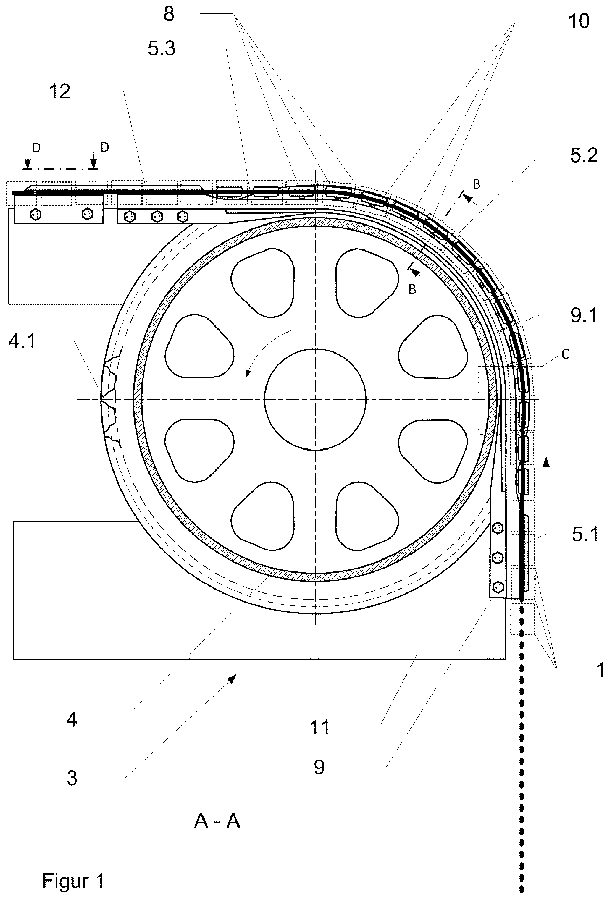

Figur 1 zeigt ein Beispiel der Umlenkvorrichtung 3 mit dem Kettenrad 4 und mit der Führungsschiene 5. Die Führungsschiene 5 weist gerade Abschnitte 5.1, 5.3 und einen gekrümmten Abschnitt 5.2 auf. Die Kette aus Spannkluppen 1 ist als Reihe von Rechtecken mit punktiertem Umriss dargestellt. Ausgehend vom ersten geraden Abschnitt 5.1 der Führungsschiene 5 wird die Kluppenkette über den gekrümmten Abschnitt 5.2 der Führungsschiene 5 um das Kettenrad 4 herum auf den zweiten geraden Abschnitt 5.3 der Führungsschiene 5 umgelenkt. Die Spannkluppen 1 bewegen sich dabei in Pfeilrichtung, während das Kettenrad 4 sich dreht.

Im vorliegenden Beispiel erfolgt eine Umlenkung um 90 Grad. Eine weitere, nicht dargestellte Umlenkeinrichtung lenkt die Kluppenkette beispielsweise um weitere 90 Grad um, sodass die Kluppenkette anschließend wieder an ihren Ausgangspunkt zurückgeführt werden kann. Normalerweise wird an der zweiten, nicht dargestellten Umlenkeinrichtung kein Kettenrad 4 benötigt, sondern es ist nur eine weitere Führungsschiene mit geraden und gekrümmten Abschnitten vorgesehen.

Das Kettenrad 4 weist zwei übereinander liegende Verzahnungen auf. In Figur 1 sind lediglich drei einzelne Zähne 4.1 des unten liegenden Zahnkranzes am Kettenrad 4 dargestellt.

Die Führungsschiene 5 der in Figur 1 dargestellten Umlenkeinrichtung ist über mehrere Klemmelemente 10 und Zapfen 8 mit dem Schienenträger 9 verbunden. Der Schienenträger 9 weist einen gekrümmten Abschnitt 9.1 auf, der parallel zum gekrümmten Abschnitt 5.2 der Führungsschiene 5 verläuft. Das heißt, dass der Schienenträger 9 um das Kettenrad 4 herum gekrümmt ist. Der Schienenträger 9 ist am Maschinengestell 11 der Umlenkvorrichtung 3 befestigt.

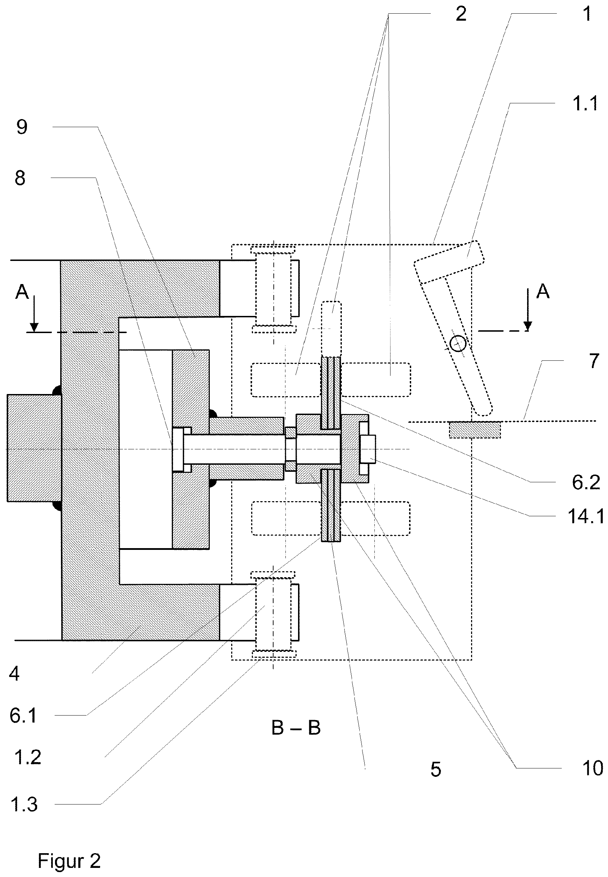

Die Figur 2 zeigt eine Ansicht im Schnitt B-B aus der Figur 1. In Figur 2 ist außerdem der Schnittverlauf A-A markiert, der verdeutlicht, wo die Schnittlinie der Ansicht A-A in Figur 1 verläuft.

Figur 2 zeigt als punktierte Konturen einige Elemente einer Spannkluppe 1. Derartige Spannkluppen 1 sind aus dem Stand der Technik bekannt. Um das Verständnis der Erfindung zu ermöglichen, sind diese Elemente hier jedoch noch einmal beschrieben. Die Spannkluppe 1 enthält im Allgemeinen einen Klemmen- oder Klappenmechanismus 1.1 zum Festklemmen der Materialbahn. Die Ebene, in der die Materialbahn in Bezug auf die Spannkluppe verläuft, ist mit 7 bezeichnet. Im Bereich der Umlenkvorrichtung 3 sind die Klappen 1.1 geöffnet, da die Materialbahn nicht mit umgelenkt wird, sondern linear verläuft.

An der Spannkluppe 1 sind weiterhin Elemente zum Verbinden der einzelnen Spannkluppen 1 zu einer Kette vorhanden. Diese sind vorliegend als zwei übereinander liegende Reihen von Kettenbolzen 1.2 dargestellt, die über die Laschen 1.3 mit den Kettenbolzen 1.2 der benachbarten Spannkluppen 1 verbunden sind. Die Kettenbolzen 1.2 greifen in die beiden übereinander liegenden Zahnkränze des Kettenrades 4 ein. Die Spannkluppe 1 enthält weiterhin Laufrollen 2 zur vertikalen und horizontalen Führung der Spannkluppen 1 auf der Führungsschiene 5. Im Rahmen der vorliegenden Erfindung sind die Laufrollen 2 der Spannkluppen 1 und die Führungsschiene 5 so gestaltet, dass eine Abstützung der Spannkluppen 1 in horizontaler Richtung an Laufbahnen 6.1, 6.2 erfolgt, die auf einander abgewandten Seiten der Führungsschiene 5 angeordnet sind. Die Führungsschiene 5 ist im vorliegenden Beispiel als Paket aus mehreren Federbändern ausgebildet. Die eine der beiden Laufbahnen 6.1 liegt auf der dem Klappenmechanismus 1.1 abgewandten Seite der Führungsschiene 5. Das ist die Seite der Führungsschiene 5, die im Bereich der Umlenkvorrichtung 3 dem Kettenrad 4 zugewandt ist. Die dem Kettenrad 4 zugewandte Laufbahn 6.1 nimmt über die zugehörigen Laufrollen 2 die Zugkräfte der Materialbahn in der Ebene 7 auf. Die andere Laufbahn 6.2 liegt auf der dem Kettenrad 4 abgewandten Seite der Führungsschiene 5 bzw. des Federpakets. Über diese Laufbahn 6.2 und die zugehörigen Laufrollen 2 stützen sich dynamische Beschleunigungskräfte ab, die an der Spannkluppe 1 in eine Richtung wirken, die den Zugkräften der Materialbahn entgegen gerichtet sind. Im vorliegenden Beispiel sind auf jeder der beiden Laufbahnseiten 6.1, 6.2 der Führungsschiene 5 jeweils zwei Laufbahnen 6 übereinander angeordnet, sodass die beschriebenen Kräfte sich jeweils über ein Paar von Laufrollen 2 abstützen können.

Zwischen den beiden übereinander liegenden Laufrollen 2 sind im vorliegenden Beispiel Verbindungselemente 8, 9, 10 angeordnet, über die die Führungsschiene 5 mit der übrigen Umlenkvorrichtung 3 verbunden ist. Im Ausführungsbeispiel gemäß den Figuren 1 und 2 erfolgt die Verbindung über einen T-förmigen Schienenträger 9.

Der Schienenträger 9 ist mit Bohrungen versehen, in denen radial zum Kettenrad 4 mehrere Zapfen 8 in ihrer Längsrichtung verschiebbar gelagert sind. Das eine Ende der Zapfen 8 ist mit einem Absatz versehen, der als Anschlag für die Begrenzung des Verschiebeweges radial vom Drehpunkt des Kettenrades 4 nach außen dient. Am anderen Ende der Zapfen 8 sind als Klemmelemente 10 jeweils zwei Klemmbacken befestigt, die zwischen sich einen Raum frei lassen, in dem die Führungsschiene 5 in einer bestimmten radialen Position gehalten wird. Die beiden Klemmbacken 10 sind miteinander über Schrauben 14.1 verspannt. Der Zwischenraum zwischen den beiden Klemmbacken 10 ist jeweils so bemessen, dass die Führungsschiene 5 in Längsrichtung des Zapfens 8 gegenüber den Klemmbacken 10 fixiert ist, während in der Querrichtung eine Verschiebung der Führungsschiene 5 gegenüber dem zughörigen Zapfen 8 möglich ist. Die Führungsschiene 5 weist hierzu im Bereich der Klemmbacken 10 jeweils ein Langloch auf, das eine Verschiebung der Führungsschiene 5 tangential zum Kettenrad 4 ermöglicht. Die Zapfen 8 weisen außerdem einen weiteren Anschlag auf, der zur Begrenzung des Verschiebeweges der Zapfen 8 radial nach innen dient. In Figur 2 ist eine Ausgangslage der Zapfen 8 bzw. der Führungsschiene 5 dargestellt, in der noch keine Veränderung der Teilung der Kluppenkette vorliegt. Bei allmählicher Vergrößerung der Teilung der Kette, das heißt bei allmählicher Vergrößerung des Abstandes von Spannkluppe 1 zu Spannkluppe 1 in Längsrichtung der Führungsschiene 5 unter Zug auf den Laschen 1.3 würden sich ohne die Anpassung der radialen Position der Führungsschiene 5 zunehmend Eingriffsstörungen zwischen Kettenrad 4 und Kettenbolzen 1.2 der Spannkluppen 1 ergeben. Durch die erfindungsgemäße Möglichkeit der radialen Verschiebung der Führungsschiene 5 nach außen, vergrößert sich der Teilkreis, auf dem die Kettenbolzen 1.2 am Kettenrad 4 ablaufen. Der Teilkreis wird dabei solange vergrößert, bis die veränderte Kettenteilung kinematisch zum veränderten Teilkreis passt. Auf diese Weise werden die beschriebenen Eingriffsstörungen im Zahneingriff zwischen Kettenrad 4 und Kluppenkette vermieden.

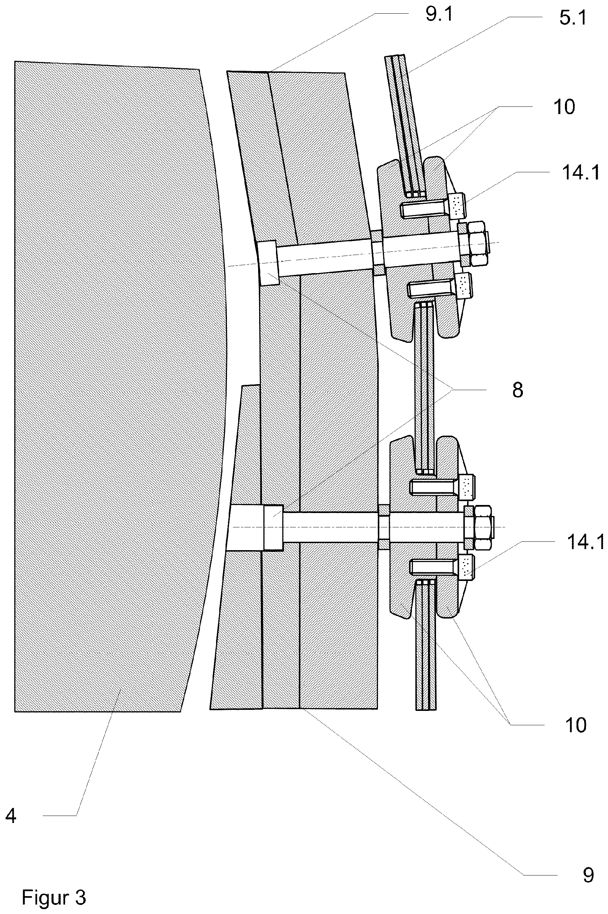

Figur 3 zeigt eine weitere Ausführungsform der erfindungsgemäßen Umlenkvorrichtung. In Figur 3 ist ein Ausschnitt dargestellt, der in etwa dem in Figur 1 markierten Ausschnitt C entspricht. In der Figur 3 verläuft der Schnittverlauf jedoch parallel versetzt zum Schnittverlauf A-A der Figur 1 und zwar in einer Ebene durch die Längsachse der Zapfen 8.

In Figur 3 erkennt man, dass die Zapfen in dieser Ausführungsform gegenüber dem Schienenträger 9 nicht in ihrer Längsrichtung verschiebbar sind. Stattdessen sind hier die Klemmbacken 10 am jeweils zugehörigen Zapfen 8 in Längsrichtung des Zapfens 8, also radial zum Kettenrad 4 verschiebbar. Als zueinander komplementäre Anschläge für die Größe der Verschiebung dienen die beiden am Zapfen angebrachten Anschlagringe. Auch in diesem Ausführungsbeispiel ist eine Verschiebung der Führungsschiene 5 quer zur Längsrichtung der Zapfen 8 möglich und zwar dadurch dass auch hier der Zwischenraum zwischen den beiden Klemmbacken 10 in Bezug zur Dicke der Führungsschiene 5 so bemessen ist, dass lediglich eine Führung, nicht jedoch eine feste Klemmung der Führungsschiene 5 erzielt wird. Die Führungsschiene 5 weist ebenso wie beim zuvor beschriebenen Beispiel entsprechende Langlöcher an jedem Paar Klemmbacken 10 auf.

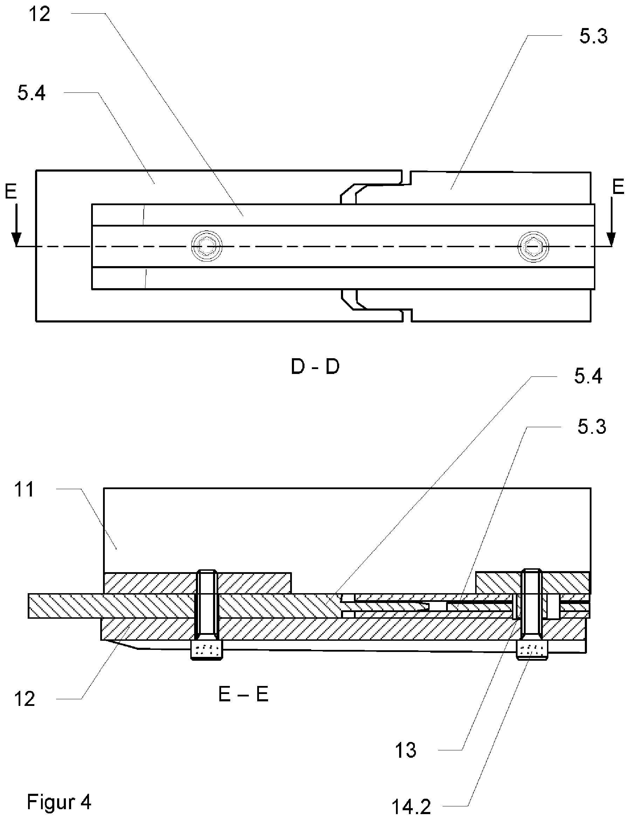

Figur 4 zeigt eine Teilansicht D-D der Ausführungsform gemäß Figur 1. Der gerade Abschnitt 5.3 der Führungsschiene 5 geht an dieser Stelle in einen geraden Abschnitt 5.4 einer Führungsschiene im angrenzenden Bereich der Anlage über. Am Übergang ist der gerade Abschnitt 5.3 der Führungsschiene 5 über die Verbindungselemente 12, 13, 14.2 und über das Maschinengestell 11 mit der Umlenkvorrichtung 3 derartig verbunden, dass eine Verschiebbarkeit in Längsrichtung der Führungsschiene 5 gegeben ist. Damit dies möglich wird, ist die Länge der Distanzhülse 13, sowie der Abstand zwischen der Verbindungsschiene 12 und dem Anschlusselement des Maschinengestells 11 so bemessen, dass bei fest gezogener Schraube 14.2 eine Verschiebung der Führungsschiene 5 in Längsrichtung noch möglich ist. Der Übergang zur benachbarten Führungsschiene 5.4 ist dabei durch eine entsprechende komplementär Profilierung der beiden Führungsschienenabschnitte 5.3, 5.4 so gestaltet, dass oberhalb und unterhalb der Verbindungsschiene 12 die Laufrollen 2 der Spannkluppe 1 auch am Übergang vom Abschnitt 5.3 zum Abschnitt 5.4 abrollen können, ohne dabei an Stufen oder Absätzen hängen zu bleiben.

### Bezugszeichen

| | |
|---|---|
| 1, 1.1, 1.2 | Spannkluppe |
| 2 | Laufrollen |
| 3 | Umlenkvorrichtung |
| 4 | Kettenrad |
| 5.1, 5.2, 5.3, 5.4 | Führungsschiene |
| 6.1, 6.2 | Laufbahn |
| 7 | Ebene der bewegte Materialbahn |
| 8 | Zapfen |
| 9, 9.1 | Schienenträger |
| 10 | Klemmelemente |
| 11 | Maschinengestell |
| 12 | Verbindungsschiene |
| 13 | Distanzhülse |
| 14.1, 14.2 | Klemmschraube |

## Patentansprüche

1. Umlenkvorrichtung (3) für eine Kette aus Spannkluppen (1) mit Laufrollen (2) zum Transport einer bewegten Materialbahn, mit einem Kettenrad (4) sowie mit einer Führungsschiene (5) mit mindestens zwei Laufbahnen (6.1, 6.2) für die Laufrollen (2) der Spannkluppen (1), wobei die zwei Laufbahnen (6.1, 6.2) jeweils auf zwei einander abgewandten Seiten der Führungsschiene (5) parallel zur Drehachse des Kettenrades (4) angeordnet sind und wobei die Führungsschiene (5) mindestens einen gekrümmten Abschnitt (5.2) zum Umlenken der Kette aufweist, **dadurch gekennzeichnet, dass** im Bereich des gekrümmten Abschnitts (5.2) der Führungsschiene (5) Verbindungselemente (8, 9, 10) vorhanden sind, über die die Führungsschiene (5) mit der Umlenkvorrichtung (3) verbunden ist, wobei mehrere Verbindungselemente (8, 9, 10) derartig ausgeführt sind, dass mindestens ein Teil des gekrümmten Abschnitts (5.2) der Führungsschiene (5) in Bezug auf das Kettenrad (4) radial verschiebbar ist.

2. Die Umlenkvorrichtung (3) nach Anspruch 1, bei der mehrere Verbindungselemente (8, 9, 10) derartig ausgeführt sind, dass mindestens ein Teil der Führungsschiene (5) in Bezug auf das Kettenrad (4) tangential verschiebbar ist.

3. Die Umlenkvorrichtung (3) nach Anspruch 2, bei der ein geradliniger Abschnitt (5.3) der Führungsschiene (5) an den gekrümmten Abschnitt (5.2) der Führungsschiene (5) anschließt, wobei der geradlinige Abschnitt (5.3) mit der Umlenkvorrichtung (3) in Längsrichtung der Führungsschiene (5) verschiebbar verbunden ist.

4. Die Umlenkvorrichtung (3) nach einem der Ansprüche 1 bis 3, mit einem Schienenträger (9), der einen gekrümmten Abschnitt (9.1) aufweist, der parallel zum gekrümmten Abschnitt (5.2) der Führungsschiene (5) verläuft, wobei die Führungsschiene (5) über den Schienenträger (9) mit der Umlenkvorrichtung (3) verbunden ist.

5. Die Umlenkvorrichtung (3) nach Anspruch 4, bei der mehrere Verbindungselemente (8, 9, 10) als Zapfen (8) mit einer Längsrichtung ausgebildet sind, wobei die Zapfen (8) derartig am Schienenträger (9) angebracht sind, das ihre Längsrichtung radial zum Kettenrad (4) verläuft.

6. Die Umlenkvorrichtung (3) nach Anspruch 5, bei der die Zapfen (8) in ihrer Längsrichtung verschiebbar gelagert sind.

7. Die Umlenkvorrichtung (3) nach Anspruch 5, bei der die Führungsschiene (5) derartig mit den Zapfen (8) verbunden ist, dass sie in Bezug auf die Zapfen (8) verschiebbar ist.

8. Die Umlenkvorrichtung (3) nach Anspruch 7, bei der als Verbindungselemente (8, 9, 10) außerdem mehrere Klemmelemente (10) vorgesehen sind, über die die Führungsschiene (5) mit den Zapfen (8) verbunden ist.

9. Die Umlenkvorrichtung (3) nach Anspruch 8, bei der die Klemmelemente (10) und die Zapfen (8) derartig ausgebildet sind, dass die Klemmelemente (10) in Bezug auf die Zapfen (8) in deren Längsrichtung oder quer dazu verschiebbar sind.

## Claims

1. Deflecting device (3) for a chain of tenter clips (1) with running rollers (2) for the transport of a moving material web, with a sprocket (4) as well as with a guide rail (5) with at least two tracks (6.1, 6.2) for the running rollers (2) of the tenter clips (1), wherein the two tracks (6.1, 6.2) are respectively arranged on two mutually oppositely facing sides of the guide rail (5) parallel to the rotation axis of the sprocket (4), and wherein the guide rail (5) comprises at least one curved section (5.2) for deflecting the chain, **characterized in that**, in the area of the curved section (5.2) of the guide rail (5), connecting elements (8, 9, 10) are present, by which the guide rail (5) is connected with the deflecting device (3), wherein several connecting elements (8, 9, 10) are embodied in such a manner so that at least a part of the curved section (5.2) of the guide rail (5) is radially slidable with respect to the sprocket (4).

2. The deflecting device (3) according to claim 1, in which several connecting elements (8, 9, 10) are embodied in such a manner so that at least a part of the guide rail (5) is slidable tangentially with respect to the sprocket (4).

3. The deflecting device (3) according to claim 2, in which a straight section (5.3) of the guide rail (5) adjoins on the curved section (5.2) of the guide rail (5), wherein the straight section (5.3) is slidably connected with the deflecting device (3) in the longitudinal direction of the guide rail (5).

4. The deflecting device (3) according to one of the claims 1 to 3, with a rail carrier (9), which comprises a curved section (9.1), which extends parallel to the curved section (5.2) of the guide rail (5), wherein the guide rail (5) is connected with the deflecting device (3) via the rail carrier (9).

5. The deflecting device (3) according to claim 4, in which several connecting elements (8, 9, 10) are embodied as studs (8) with a longitudinal direction, wherein the studs (8) are mounted on the rail carrier (9) in such a manner so that their longitudinal direction extends radially to the sprocket (4).

6. The deflecting device (3) according to claim 5, in which the studs (8) are supported slidably in their longitudinal direction.

7. The deflecting device (3) according to claim 5, in which the guide rail (5) is connected with the studs (8) in such a manner so that it is slidable with respect to the studs (8).

8. The deflecting device (3) according to claim 7, in which furthermore several clamping elements (10) are provided as connecting elements (8, 9, 10) via which the guide rail (5) is connected with the studs (8).

9. The deflecting device (3) according to claim 8, in which the clamping elements (10) and the studs (8) are embodied in such a manner so that the clamping elements (10) are slidable with respect to the studs (8) in their longitudinal direction or transversely thereto.

## Revendications

1. Dispositif de renvoi (3) pour une chaîne constituée de pinces de serrage (1) avec des galets (2) pour le transport d'une bande de matériau mobile, avec un pignon (4) ainsi qu'avec un rail de guidage (5) avec au moins deux pistes de roulement (6.1, 6.2) pour les galets (2) des pinces de serrage (1), les deux pistes de roulement (6.1, 6.2) étant disposées chacune sur deux côtés opposés du rail de guidage (5) parallèlement à l'axe de rotation du pignon (4) et le rail de guidage (5) comprenant au moins une portion incurvée (5.2) pour le renvoi de la chaîne, **caractérisé en ce que**, au niveau de la portion incurvée (5.2) du rail de guidage (5), se trouvent des éléments de liaison (8, 9, 10) par l'intermédiaire desquels le rail de guidage (5) est relié avec le dispositif de renvoi (3), plusieurs éléments de liaison (8, 9, 10) étant conçus de façon à ce qu'au moins une partie de la portion incurvée (5.2) du rail de guidage (5) puisse être déplacée radialement par rapport au pignon (4).

2. Dispositif de renvoi (3) selon la revendication 1, dans lequel plusieurs éléments de liaison (8, 9, 10) sont conçus de façon à ce qu'au moins une partie du rail de guidage (5) puisse être déplacée de manière tangentielle par rapport au pignon (4).

3. Dispositif de renvoi (3) selon la revendication 2, dans lequel une portion droite (5.3) du rail de guidage (5) suit la portion incurvée (5.2) du rail de guidage (5), la portion droite (5.3) étant reliée avec le dispositif de renvoi (3) de manière mobile dans la direction longitudinale du rail de guidage (5).

4. Dispositif de renvoi (3) selon l'une des revendications 1 à 3, avec un support de rail (9), qui comprend une portion incurvée (9.1), qui s'étend parallèlement à la portion incurvée (5.2) du rail de guidage (5), le rail de guidage (5) étant relié avec le dispositif de renvoi (3) par l'intermédiaire du support de rail (9).

5. Dispositif de renvoi (3) selon la revendication 4, dans lequel plusieurs éléments de liaison (8, 9, 10) sont conçus comme des tenons (8) avec une direction longitudinale, les tenons (8) étant montés sur le support de rail (9) de façon à ce que sa direction longitudinale s'étende radialement par rapport au pignon (4).

6. Dispositif de renvoi (3) selon la revendication 5, dans lequel les tenons (8) sont logés de manière mobile dans leur direction longitudinale.

7. Dispositif de renvoi (3) selon la revendication 5, dans lequel le rail de guidage (5) est relié avec les tenons (8) de façon à ce qu'il soit mobile par rapport aux tenons (8).

8. Dispositif de renvoi (3) selon la revendication 7, dans lequel, en tant qu'éléments de liaison (8, 9, 10), sont prévus en outre plusieurs éléments de serrage (10) par l'intermédiaire desquels le rail de guidage (5) est relié avec les tenons (8).

9. Dispositif de renvoi (3) selon la revendication 8, dans lequel les éléments de serrage (10) et les tenons (8) sont conçus de façon à ce que les éléments de serrage (10) soient mobiles par rapport aux tenons (8) dans leur direction longitudinale ou transversalement par rapport à celle-ci.
